Europäisches Patentamt

European Patent Office

Office européen des brevets

(19)

(11) **EP 0 935 860 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(21) Anmeldenummer: **97942938.8**

(22) Anmeldetag: **17.09.1997**

(51) Int Cl.⁷: **H04L 9/32**

(86) Internationale Anmeldenummer:
**PCT/EP97/05081**

(87) Internationale Veröffentlichungsnummer:
**WO 98/15085 (09.04.1998 Gazette 1998/14)**

(54) **VERFAHREN ZUR ÜBERTRAGUNG VON SIGNALEN**

SIGNAL TRANSMISSION PROCESS

PROCEDE DE TRANSMISSION DE SIGNAUX

(84) Benannte Vertragsstaaten:
**AT BE CH DE DK ES FI FR GB GR IE IT LI LU MC NL PT SE**

(30) Priorität: **01.10.1996 DE 19640526**

(43) Veröffentlichungstag der Anmeldung:
**18.08.1999 Patentblatt 1999/33**

(73) Patentinhaber: **Deutsche Telekom AG**
**64307 Darmstadt (DE)**

(72) Erfinder:
• **SCHEERHORN, Alfred**
**D-49716 Meppen (DE)**
• **HUBER, Klaus**
**D-64283 Darmstadt (DE)**

(56) Entgegenhaltungen:
**WO-A-94/21066**

• **JUENEMAN ET AL.: "MESSAGE AUTHENTICATION WITH MANIPULATION DETECTION CODES" PROCEEDINGS OF THE 1983 SYMPOSIUM ON SECURITY AND PRIVACY, 25.April 1983, SILVER SPRING (US), Seiten 33-54, XP002055686**

**Beschreibung**

Die Erfindung betrifft ein Verfahren zur Übertragung von Signalen nach dem Oberbegriff des Patentanspruchs 1.

Bei der Übertragung von Signalfolgen spielt die authentische Übertragung der Daten bzw. Signale immer eine größere Rolle. So ist zum Beispiel in ISO/IEC 9797, Information technology - Security techniques - Data integrity mechanisms using a cryptographic check function employing a block cipher algorithm (JTC1/SC27 1994) eine Lösung für dieses Problem beschrieben. Dabei sind dem Sender und dem Empfänger gleiche geheime Schlüssel in Verbindung-mit einem Verschlüsselungsalgorithmus (block cipher, encipherment algorithm) oder mit einer schlüsselabhängigen Einwegfunktion (cryptographic check function) zugeordnet. Dies kann zum Beispiel auf einer Chipkarte erfolgen. Der Sender fügt jedem Signal (Datum) eine kryptgraphische Prüfsumme (Message authentication code) hinzu, die vom geheimen Schlüssel und dem kryptographischen Algorithmus (Verschlüsselung bzw. Einwegfunktion) abhängt. Der Empfänger berechnet seinerseits die Prüfsumme und erkennt die empfangenen Signale bei Gleichheit der Prüfsumme als authentisch an. Diese Lösung hat jedoch folgende Nachteile: Um eine Änderung der Reihenfolge der übertragenen Daten zu erkennen, wird die Prüfsumme eines Signals abhängig von der Prüfsumme der bisher gesendeten Signale berechnet. Auch für den Fall, daß nach jedem Signal eine Prüfsumme gesendet wird, ist dies notwendig, da sonst ein Angreifer Signalprüfsummenpaare aufzeichnen und in geänderter Reihenfolge unbemerkt einspielen könnte. Dies erfordert in der bekannten Lösung für jede Prüfsumme eine Durchführung des kryptographischen Algorithmus. Da Reihenfolge und Auswahl der Signale nicht genau im Voraus feststehen, ist es auch nicht möglich, die erforderlichen Prüfsummen im Voraus zu berechnen.

In einer zeitkritischen Umgebung kann dies zu Problemen führen. Die Berechnung des kryptographischen Algorithmus kann zum Beispiel auf einer Chipkarte stattfinden. Beim Einsatz einer schon evaluierten Chipkarte ist dies vorteilhaft, ansonsten ist eine zusätzliche Softwareimplementierung des Algorithmus erneut zu evaluieren. Die Kommunikation mit der Chipkarte und die Berechnung des kryptographischen Algorithmus auf der Chipkarte sind sehr zeitintensiv.

Der Erfindung liegt deshalb die Aufgabe zugrunde, ein Verfahren zur authentischen Signal- oder Datenübertragung zu schaffen, das zu einem vorgegebenen Signalvorrat und einer vorgegebenen maximalen Anzahl zu übertragender Signale die Berechnung von Authentifikationsinformationen vorab ermöglicht, so daß in der Kommunikationsphase aus diesen schon vorher berechneten Informationen einfach und schnell Prüfsummen zu den gesendeten Signalen bzw. Daten berechnet werden können.

Die erfindungsgemäße Lösung ist im Kennzeichen des Patentanspruchs 1 charakterisiert.

Weitere Lösungen der Aufgabe bzw. Ausgestaltungen des Erfindungsgegenstandes sind in den kennzeichnenden Teilen der Patentansprüche 2 bis 10 charakterisiert.

Durch die bewußte Einführung einer Vorberechnungsphase und einer Kommunikationsphase in das Übertragungsverfahren ist es jetzt möglich, die Berechnung von Authentifikationsinformationen schon vor der eigentlichen Kommunikationsphase durchzuführen, und während der Übertragungsphase können nun aus diesen schon vorher berechneten Informationen einfach und schnell Prüfsummen zu den gesendeten Signalen berechnet werden. Die Lösung der Aufgabe besteht in einem Verfahren aus einer Vorberechnungsphase und einer Kommunikationsphase, in der die Signale oder Daten zusammen mit den Prüfsummen übertragen werden. In der Vorberechnungsphase wird mittels kryptographischer Algorithmen, zum Beispiel einer Blockchiffre im "Output-Feedback-Mode", aus dem Zeitvariantenparameter (Sequenznummer, Zeitmarke und sonstigen Initialisierungsdaten) zunächst eine Pseudozufallsfolge Z erzeugt. Als Beispiel wird $m = 16$, 32 oder 64 für einen Sicherheitsparameter $m$ angenommen. Aus der Folge Z werden jetzt sich nicht überschneidende Abschnitte $z(i)$ von jeweils $m$ Bit den Signalen $s[i]$, $i = 1, 2, ..., n$ des Signalvorrates zugeordnet. Aus der verbleibenden Folge werden weitere sich nicht überschneidende $m$ Bit Abschnitte $t[i]$ als Codierung der Nummern 1, 2, ... MAX gewählt, wobei MAX die maximale Anzahl der zu übertragenden Signale ist.

Wenn in der anschließenden Kommunikationsphase eine Senderauthentifikation erforderlich ist, wird zunächst dem Ablauf der "One pass authentication" gemäß den Veröffentlichungen ISO/IEC 9798-2, Information technology - Security techniques - Entity authentication Mechanisms - Part 2: Mechanisms using symmetric encipherment algorithms (JTC1/SC27 1994) und ISO/IEC 9798-4, Information technology - Security techniques - Entity authentication Mechanisms - Part 4: Mechanisms using a cryptographic check function (JTC1/SC27 1995) gefolgt. Der Sender überträgt die Initialisierungsinformation und die zeitvarianten Parameter an den Empfänger und als Authentisierungstoken sendet er eine Anzahl bisher nicht verwendeter Bits aus Z an den Empfänger. Der Empfänger berechnet seinerseits die Pseudozufallsfolge Z und überprüft das empfangene Authentisierungstoken. Die während der Signalübertragung vom Empfänger empfangenen Signale werden als authentisch akzeptiert, wenn die empfangenen Authentifikationstoken mit denen, die er berechnet hat, übereinstimmen. Darüber hinaus sind noch Modifikationen des Verfahrens möglich, die in der nachfolgenden Beschreibung noch im Einzelnen beschrieben werden.

Die Erfindung wird nun anhand von in der Zeichnung dargestellten Ausführungsbeispielen näher beschrieben. In der Zeichnung bedeuten:

Fig. 1 ein Flußdiagramm für die prinzipielle Operationsfolge im Empfänger und

Fig. 2 ein Flußdiagramm für die prinzipielle Operationsfolge in einem Sender.

Das Verfahren besteht aus einer Vorberechnungsphase und einer Kommunikationsphase, in der die Signale zusammen mit den Prüfsummen übertragen werden.

Vorberechnungsphase:

Mittels des kryptographischen Algorithmus (zum Beispiel einer Blockchiffre im "Output-Feedback-Mode" gemäß ISO/IEC 10116, Information Processing - Modes of Operation for an n-bit Block Cipher Algorithm (JTC1/SC27 1991)) wird aus einem zeitvarianten Parameter (Sequenznummer, Zeitmarke, gemäß ISO/IEC 9798-2, Information technology - Security techniques - Entity authentication Mechanisms - Part 2: Mechanisms using symmetric encipherment algorithms (JTC1/SC27 1994)) und sonstigen Initialisierungsdaten zunächst eine Pseudozufallsfolge Z erzeugt. Es sei m ein Sicherheitsparameter, zum Beispiel M = 16, 32 oder 64. Aus der Folge Z werden jetzt sich nicht überschneidende Abschnitte $z[i]$ von jeweils m Bits den Signalen $s[i]$, i = 1, 2, ..., n des Signalvorrates zugeordnet. Aus der verbleibenden Folge werden weitere sich nicht überschneidende m Bit Abschnitte $t[i]$ als Codierung der Nummern 1, 2, ...MAX gewählt, wobei MAX die maximale Anzahl der zu übertragenden Signale ist.

Kommunikationsphase:

a) Senderauthentifikation:

Falls eine Senderauthentifikation erforderlich ist, wird zunächst dem Ablauf der "One pass authentication" gemäß den Veröffentlichungen ISO/IEC 9798-2, Information technology - Security techniques - Entity authentication Mechanisms - Part 2: Mechanisms using symmetric encipherment algorithms (JTC1/SC27 1994) und ISO/IEC 9798-4, Information technology - Security techniques - Entity authentication Mechanisms - Part 4: Mechanisms using a crpytographic check function (JTC1/SC27 1995) gefolgt. Der Sender überträgt die Initialisierungsinformation und die zeitvarianten Parameter an den Empfänger. Als Authentisierungstoken sendet er eine Anzahl bisher nicht verwendeter Bits aus Z an den Empfänger. Der Empfänger berechnet seinerseits die Pseudozufallsfolge Z und prüft das empfangene Authentisierungstoken.

b) Signalübertragung und -authentifikation:

Sei $s[k[1]]$ das erste Signal, das übertragen wird, dann sendet der Sender zur Authentifikation des ersten Signals $T(1):=f(z[k[1]],t[1])$, wobei f eine schnell berechenbare Verknüpfung der beiden Werte $z[k[1]]$ und $t[1]$ ist. Ein Beispiel für f ist die bitweise XOR Verknüpfung.

Für i = 2, 3, ..., i maximal MAX, sei $s[k[i]]$ das i-te Signal, das übertragen wird. Zur Authentifikation dieses Signals sendet der Sender das Token $T(i):=f(z[k[i]],t[i])$. Der Empfänger führt jeweils dieselben Berechnungen aus und akzeptiert die empfangenen Signale als authentisch, wenn die vom Sender empfangenen Authentifikationstoken mit denen, die er berechnet hat, übereinstimmen.

Die Reihenfolge der übertragenen Signale wird durch den Einfluß der Werte $t[i]$ gesichert.

Eine Variante der Signalauthentifikation besteht im folgenden: Wenn es erforderlich ist, das Authentifikationstoken $T(i)$ des i-ten Signals $s[k[i-1]]$ abhängig von allen bisher gesendeten Signalen $s[k[1]],..., s[k[i-1]]$ zu wählen, kann zur Authentifikation des i-ten Signals $s[k[i]]$ das Token

$$T(i) = f(t[i], F(i))$$

gesendet werden, wobei

$$F(1) = s[k[1]]$$

und

$$F(i) = f(s[k[i]],F(i-1))$$

für

$$i > 1.$$

Die Berechnung des Authentifikationstokens $T(i)$ erfordert somit zweimal die Berechnung von f.

Ein Beispiel für die Anwendung eines derartigen Verfahrens ist der authentische Verbindungsaufbau beim Telefonieren. Beim Senden der Wahltöne ist nicht bekannt, ob noch ein weiterer Wahlton folgt. Deshalb erscheint es erforderlich, jeden Wahlton in der ihm nachfolgenden Pause durch die Übertragung eines Tokens zu authentisieren. Beim Mehrfrequenzwahlverfahren beträgt die Länge der Wahltöne mindestens 65ms und die Pausenlänge zwischen den Wahltönen mindestens 80ms. Für die Authentifikation, wie sie hier beschrieben ist, ist auch diese kurze Zeitdauer von 145ms ohne Probleme ausreichend.

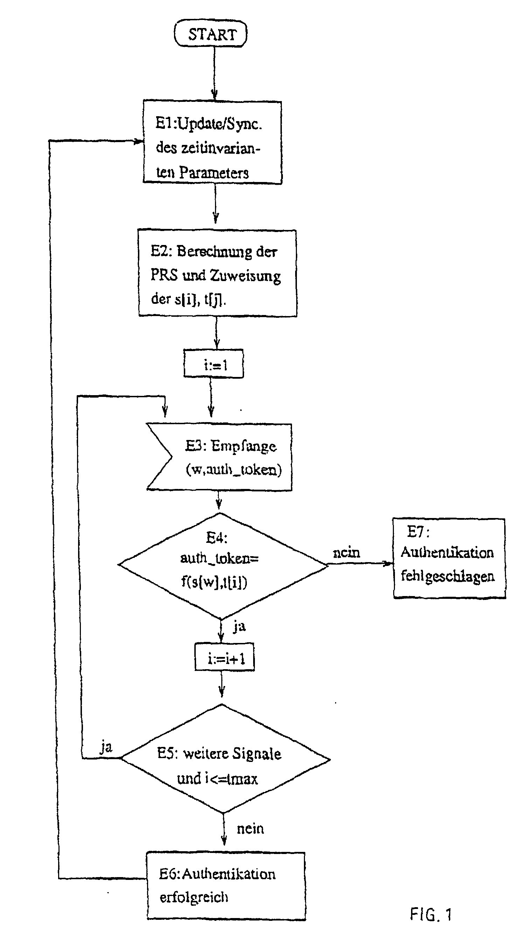

Zunächst soll anhand des Flußdiagramms nach Fig. 1 die Operations- oder Schrittfolge des Empfängers beschrieben werden.

In dem Telefonbeispiel ist der Sender das Telefon, gegebenenfalls ausgestattet mit Kryptomodul und/oder Chipkarte, und der Empfänger das Telefonnetz, zum Beispiel die nächste Vermittlungsstelle.

E1 und S1: Hier wird der zeitinvariante Parameter zwischen dem Empfänger und Sender synchronisiert. Der zeitinvariante Parameter kann eine Sequenznummer oder Zeitmarke sein, die synchronisiert vorliegt. Dieser Parameter darf gegebenenfalls auch zur Synchronisation im Klartext oder verschlüsselt vom Sender an den Empfänger gesendet werden. Im erfindungsgemäßen Verfahren ist es sinnvoll, daß der Sender den zeitinvarianten Parameter schon kennt, bevor ein Verbindungsaufbau gewünscht wird, um die s[], t[] vorzuberechnen.

E2 und S2: Hier berechnen Sender und Empfänger zunächst eine Zufallsfolge PRS (Pseudo-Random-Sequence) der Länge m*(smax+tmax) Bit, wobei

m: Sicherheitsparameter, im Beispiel m:=32.

smax: Maximale Anzahl der unterschiedlichen Signale (Anzahl der Elemente des Alphabets/Signalvorates). Im Telefonbeispiel die Ziffern 1..9 und Spezialsymbole wie #, und andere.

tmax: Maximale Anzahl der Signale, die in einem Durchgang authentisiert werden sollen. Im Telefonbeispiel max. Länge einer Telefonnummer, max. Anzahl von Ziffern und Spezialsymbolen für einen Verbindungsaufbau.

Danach werden jeweils sich nicht überschneidende Abschnitte von m Bits dieser Zufallsfolge PRS den m Bit Größen s[1], s[2], ..., s[smax], t[1], t[2], ..., t[tmax] zugewiesen:

S[1] = Bit 1 bis Bit m der PRS
s[2] = Bit m+1 bis Bit 2*m der PRS
...
s[max] = Bit (smax-1)*m+1 bis Bit smax*m der Zufallsfolge PRS
t[1] = Bit smax*m+1 bis Bit (smax+1)*m der Zufallsfolge PRS
...
t[tmax] = Bit (smax+tmax-1)*m+1 bis Bit (smax+tmax)*m der Zufallsfolge PRS

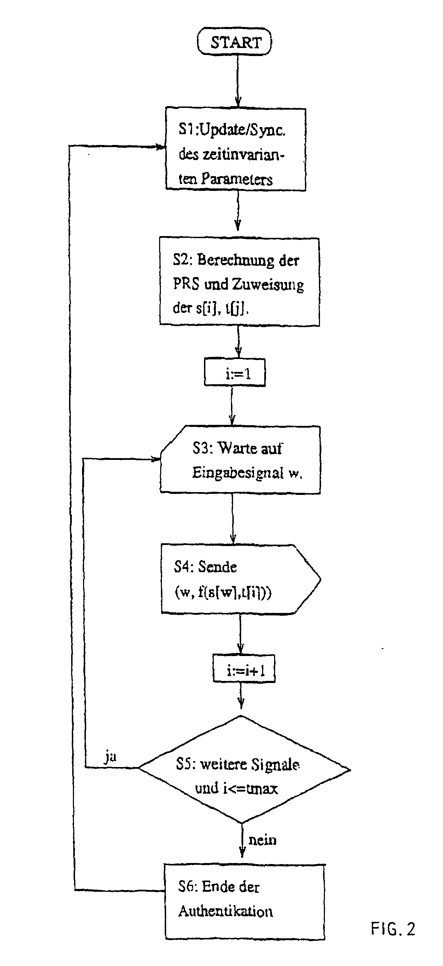

Anhand von Fig. 2 wird nachfolgend die Operations- oder Schrittfolge für den Sender beschrieben.

S3:      Der Sender wartet auf ein Signal w, das authentisch übertragen werden soll. w wird als natürliche Zahl zwischen 1, 2, ..., smax interpretiert, um die Abbildung w -> s[w] einfach zu halten.

S4:      Der Sender sendet das i-te Signal w zusammen mit dem Authentifizierungstoken f(s[w],t[i]). Im Telefonbeispiel ist das Token f(s[w],t[i])=s[w]⊕t[i], das bitweise XOR von s[w] und t[i].

S5:      S3 und S4 werden solange iteriert wiederholt, bis entweder keine Signale mehr authentisch übertragen werden sollen oder die maximale Anzahl von Signalen, die mit diesem Vorrat an vorberechneter Zufallsfolge PRS authentisiert werden können, erreicht ist.

S6:      Im Telefonbeispiel wartet der Sender jetzt auf den Verbindungsaufbau des Empfängers.

E3, E4 und E5:      Solange neue Signale mit zugehörigen Authentisierungstoken empfangen werden, prüft der Empfänger, ob die von ihm berechneten Authentisierungstoken mit den empfangenen übereinstimmen.

E6:      Falls alle Token übereinstimmen, werden die empfangenen Signale als authentisch akzeptiert. Im Telefonbeispiel erfolgt jetzt der Verbindungsaufbau.

E7:      Bei nicht erfolgreicher Authentisierung erfolgt kein Verbindungsaufbau.

**Patentansprüche**

1. Verfahren zum Übertragen von Signal-/Datenfolgen zwischen einem Sender und einem Empfänger mit Authentifizierung der übertragenen Signal-/Datenfolgen durch Verwendung von Schlüsseln und kryptographischen Algorithmen, die sowohl auf der Sender- als auch auf der Empfängerseite implementiert sind, **dadurch gekennzeichnet, daß** in einer Vorberechnungsphase mittels kryptographischer Algorithmen Daten abhängig von einem geheimen Schlüssel berechnet werden, aus denen in einer nachfolgenden Kommunikationsphase Authentifikationstoken für die Signale berechnet werden, die sowohl die Signale als auch die Reihenfolge des Sendens der Signale authentisieren.

**2.** Verfahren nach Patentanspruch 1, **dadurch gekennzeichnet,**

**daß** in der Vorberechnungsphase mittels eines kryptographischen Algorithmus eine Pseudozufallsfolge (PRS) erzeugt wird,

**daß** aus dieser Folge bestimmte Abschnitte als Codierung sowohl der Signale eines Signalvorrates als auch der Sendestellen (1, 2, ... MAX) verwendet werden und

**daß** das Authentifikationstoken des Signals, das an i-ter (i = 1, 2, ..., MAX) Stelle gesendet wird, abhängig von der Codierung des Signals und von der Codierung der Sendestelle (i) berechnet wird.

**3.** Verfahren nach Patentanspruch 2, **dadurch gekennzeichnet,**
**daß** das Authentifikationstoken (T) des Signals, das an i-ter (i = 1, 2, ..., MAX) Stelle gesendet wird, die bitweise XOR-Verknüpfung oder eine äquivalente logische Funktion der Codierung des jeweiligen Signals und der Codierung der Sendestelle (i) ist.

**4.** Verfahren nach Patentanspruch 1, **dadurch gekennzeichnet,**

**daß** in der Vorberechnungsphase mittels eines kryptographischen Algorithmus eine Pseudozufallsfolge (PRS) erzeugt wird,

**daß** aus dieser Folge bestimmte Abschnitte als Codierung sowohl der Signale des Signalvorrates als auch der Sendestellen (1, 2, ..., MAX) verwendet werden und

**daß** das Authentifikationstoken des Signals, das an i-ter Stelle (i = 1, 2, ..., MAX) gesendet wird, abhängig von der Codierung aller bisher gesendeten Signale (1, 2, ..., i) und von der Codierung der Sendestelle (i) berechnet wird.

**5.** Verfahren nach Patentanspruch 4, **dadurch gekennzeichnet,**
**daß** das Authentifikationstoken (T) des Signals, das an i-ter Stelle (i = 1, 2, ... MAX) gesendet wird, die bitweise XOR-Verknüpfung oder eine äquivalente logische Verknüpfung der Codierung aller bisher gesendeten Signale (1, 2, ... i) und der Codierung der Sendestelle (i) ist.

**6.** Verfahren nach einem der Patentansprüche 1 bis 5, **dadurch gekennzeichnet,**
**daß** der in der Vorberechnungsphase verwendete kryptographische Algorithmus eine Blockchiffre ist.

**7.** Verfahren nach Patentanspruch 6, **dadurch gekennzeichnet,**
**daß** als Blockchiffre der bekannte "Data Encryption Standard" verwendet wird.

**8.** Verfahren nach Patentanspruch 2 oder 4, **dadurch gekennzeichnet,**
**daß** die Pseudozufallsfolge (PSR) durch Betreiben der Blockchiffre im bekannten "Output-Feedback-Mode" erzeugt wird.

**9.** Verfahren nach einem der Patentansprüche 1 bis 8, **dadurch gekennzeichnet,**
**daß** in der Vorberechnungsphase zusätzlich ein Token (T) zur Authentifikation des jeweiligen Senders berechnet wird, das nachfolgend übertragen wird und den Empfänger zur Authentifikation des Senders initiiert.

**10.** Verfahren nach einem der Patentansprüche 1 bis 9, **dadurch gekennzeichnet,**
**daß** die Reihenfolge der übertragenen Signale durch die sich nicht überschneidenden m Bit Abschnitte (t(i)) gesichert ist.

## Claims

**1.** Process for transmitting signal/data sequences between a transmitter and a receiver with authentication of the transmitted signal/data sequences by using keys and cryptographic algorithms implemented both at the transmitter end and also at the receiver end, **characterized in that**
in a precalculation phase by means of cryptographic algorithms, data are calculated depending on a secret key, from which data are calculated in a following communication phase authentication tokens for the signals, said authentication tokens authenticating both the signals and also the sequence of transmission of the signals.

**2.** Process according to claim 1, **characterized in that**

a pseudorandom sequence (PRS) is generated in the precalculation phase by means of a cryptographic algorithm;

from said sequence certain portions are used as coding both of the signals of a signal set and also of the transmission positions (1, 2, ... MAX); and

the authentication token of the signal transmitted in i-th (i = 1, 2, ..., MAX) position is calculated depending on the coding of the signal and on the coding of the transmission position (i).

3. Process according to claim 2, **characterized in that**
the authentication token (T) of the signal transmitted in i-th (i = 1, 2, ..., MAX) position is the bitwise XOR function or an equivalent logic function of the coding of the respective signal and of the coding of the transmission position (i).

4. Process according to claim 1, **characterized in that**

a pseudorandom sequence (PRS) is generated in the precalculation phase by means of a cryptographic algorithm;

from said sequence certain portions are used as coding both of the signals of the signal set and also of the transmission positions (1, 2, ..., MAX); and

the authentication token of the signal transmitted in i-th position (i = 1, 2,..., MAX) is calculated depending on the coding of all hitherto transmitted signals (1, 2, ..., i) and on the coding of the transmission position (i).

5. Process according to claim 4, **characterized in that**
the authentication token (T) of the signal transmitted in i-th position (i = 1, 2, ... MAX) is the bitwise XOR function or an equivalent logic function of the coding of all hitherto transmitted signals (1, 2, ... i) and of the coding of the transmission position (i).

6. Process according to any one of claims I to 5, **characterized in that**
the cryptographic algorithm used in the precalculation phase is a block cipher.

7. Process according to claim 6, **characterized in that**
the known "Data Encryption Standard" is used as the block cipher.

8. Process according to claim 2 or 4, **characterized in that**
the pseudorandom sequence (PRS) is generated by operating the block cipher in the known "output feedback mode".

9. Process according to any one of claims 1 to 8, **characterized in that**
in the precalculation phase a token (T) is additionally calculated for authenticating the respective transmitter, said token (T) being subsequently transmitted and initiating the receiver for authentication of the transmitter.

10. Process according to any one of claims 1 to 9, **characterized in that**
the sequence of the transmitted signals is secured by the non-overlapping m bit portions (t(i)).

**Revendications**

1. Procédé de transmission de suites de données /de signaux entre un émetteur et un récepteur avec authentification des suites de données/de signaux émis au moyen de clés et d'algorithmes cryptographiques installés à la fois du côté émetteur et du côté récepteur, **caractérisé en ce que**
lors d'une phase de précalcul, des données sont calculées au moyen d'algorithmes cryptographiques en fonction d'une clé secrète, à partir desquelles des jetons de communications sont calculés pour les signaux dans la phase de communication qui suit, qui authentifient à la fois les signaux et l'ordre d'émission des signaux.

2. Procédé selon la revendication 1, **caractérisé en ce que**

pendant la phase de précalcul, une suite pseudo-aléatoire (PRS) est créée au moyen d'un algorithme cryptographique

certains extraits de cette suite sont utilisés à la fois pour le codage des signaux d'une réserve de signaux et le codage des stations émettrices (1, 2, ....MAX) et

le jeton d'authentification du signal, qui est envoyé à i-ter stations (s) (i = 1, 2, ....MAX), est calculé en fonction du codage du signal et du codage de la station émettrice (i).

3. Procédé selon la revendication 2, **caractérisé en ce que**
le jeton d'authentification (T) du signal, qui est envoyé à i-ter stations (s) (i = 1, 2, ...MAX), est une liaison XOR par bits ou une fonction logique équivalente du codage de chaque signal et du codage de la station émettrice (i).

4. Procédé selon la revendication 1, **caractérisé en ce que**

pendant la phase de précalcul, une suite pseudo-aléatoire (PRS) est créée au moyen d'un algorithme cryptographique,

certains extraits de cette suite sont utilisés à la fois pour le codage des signaux d'une réserve de signaux et le codage des stations émettrices (1, 2, ....MAX) et que

le jeton d'authentification (T) du signal, qui est envoyé à i-ter stations (s) (i = 1, 2, ....MAX), est calculé en fonction du codage de l'ensemble des signaux déjà envoyés (1, 2, ...., i) et du codage de la station émettrice (i).

5. Procédé selon la revendication 4, **caractérisé en ce que**
le jeton d'authentification (T) du signal, qui est envoyé à i-ter stations (s) (i = 1, 2, ....MAX), est une liaison XOR par bits ou une fonction logique équivalente du codage de l'ensemble des signaux déjà envoyés (1, 2, ...., i) et du codage de la station émettrice (i).

6. Procédé selon les revendications 1 à 5, **caractérisé en ce que**
l'algorithme cryptographique utilisé dans la phase de précalcul est un chiffre-bloc.

7. Procédé selon la revendication 6, **caractérisé en ce que**
le chiffre-bloc employé est le Standard de Codage des Données ( « Data Encryption Standard ») bien connu.

8. Procédé selon les revendications 2 ou 4, **caractérisé en ce que**
la suite pseudo-aléatoire (PSR) est créée par exploitation du chiffre-bloc selon le mode OFB ( « Output-Feedback-Mode ») bien connu.

9. Procédé selon l'une des revendications 1 à 8, **caractérisé en ce que**
pendant la phase de précalcul, il est en plus calculé un jeton (T) d'authentification de l'émetteur ; ce jeton est ensuite transmis et invite le récipiendaire à authentifier l'émetteur.

10. Procédé selon l'une des revendications 1 à 9, **caractérisé en ce que**
l'ordre des signaux transmis est sécurisée par les extraits (t(i)) de m octets ne se chevauchant pas.

FIG. 1

START

S1: Update/Sync. des zeitinvarianten Parameters

S2: Berechnung der PRS und Zuweisung der $s[i]$, $t[j]$.

$i := 1$

S3: Warte auf Eingabesignal $w$.

S4: Sende $(w, f(s[w], t[i]))$

$i := i + 1$

S5: weitere Signale und $i <= t_{max}$

ja

nein

S6: Ende der Authentikation

FIG. 2